# EUROPEAN PATENT APPLICATION

(11) **EP 4 033 404 A1**
(43) Date of publication of application: **27.07.2022**
(21) Application number: 22152399.6
(22) Date of filing: 20.01.2022
(51) Int. Cl.: G06K 9/62, G06V 10/778, G06V 10/70

(54) **CLASS DETERMINATION SYSTEM, CLASS DETERMINATION METHOD, AND CLASS DETERMINATION PROGRAM**

(30) Priority: 26.01.2021 JP 2021010593
(71) Applicant: Nitto Denko Corporation, Ibaraki-shi, Osaka 567-8680 (JP)
(72) Inventor: Chan, Yatfei, Ibaraki-shi, Osaka 567-8680 (JP); Kigawa, Yoichi, Ibaraki-shi, Osaka 567-8680 (JP)
(74) Representative: Hoffmann Eitle

(57) **Abstract**

A class determination system includes: a classification unit configured to classify image data of an object to be inspected into one of a predetermined number of classes; an extraction unit provided to be associated with a classification target, and configured to extract a feature value by processing the image data classified by the classification unit; a determination unit configured to determine whether the feature value of the image data of the object to be inspected is included in a distribution region of the classification target into which the image data of the object to be inspected is classified, from among distribution regions of feature values of image data items whose classification targets are known, where in each of the distribution regions, a feature value space is defined for a corresponding classification target; and an output unit configured to output, in a case where it is determined that the feature value of the image data of the object to be inspected is not included in the distribution region, a determination result that the image data of the object to be inspected belongs to a new class.

## Description

### [Technical Field]

The present disclosure relates to a class determination system, a class determination method, and a class determination program.

### [Background Art]

A class determination system has been known, in which based on image data of an object to be inspected, whether the object to be inspected is normal or anomalous is determined, and if determined as anomalous, by determining the type of anomaly, the class to which the image data belongs is determined.

In such a class determination system, the class is determined by, for example, executing supervised learning by using image data items whose classes are known as the training data to generate a trained model, and applying the model to an image data item whose class is unknown.

### [Related Art Documents]

### [Patent Documents]

[Patent Document 1] Japanese Laid-Open Patent Application No. 2019-32268

### [Summary of the Invention]

### [Problem to be Solved by the Invention]

However, in the class determination system described above, in the case where a new type of anomaly that is not included in the training data occurs, an incorrect class determination would be executed.

In an aspect, it is an object to provide a class determination system, a class determination method, and a class determination program that reduce erroneous determinations in the case where class determination is executed for image data items of an object to be inspected.

### [Means for Solving Problem]

According to one embodiment, a class determination system includes:
a classification unit configured to classify image data of an object to be inspected into one of a predetermined number of classes;
an extraction unit provided to be associated with a classification target, and configured to extract a feature value by processing the image data classified by the classification unit;
a determination unit configured to determine whether the feature value of the image data of the object to be inspected is included in a distribution region of the classification target into which the image data of the object to be inspected is classified, from among distribution regions of feature values of image data items whose classification targets are known, where in each of the distribution regions, a feature value space is defined for a corresponding classification target; and
an output unit configured to output, in a case where it is determined that the feature value of the image data of the object to be inspected is not included in the distribution region, a determination result that the image data of the object to be inspected belongs to a new class.

### [Advantageous Effects of the Invention]

A class determination system, a class determination method, and a class determination program that reduce erroneous determinations in the case where class determination is executed for image data of an object to be inspected, can be provided.

### [Brief Description of the Drawings]

FIG. 1 is a diagram illustrating an example of a system configuration of a class determination system in a learning phase;
FIG. 2 is a diagram illustrating an example of a hardware configuration of a classification device or a determination device;
FIG. 3 is a diagram illustrating a specific example of processing executed by a classification learning unit of the classification device;
FIG. 4 is a diagram illustrating a specific example of processing executed by a first determination learning unit of a first determination device;
FIG. 5 is a diagram illustrating an example of a system configuration of a class determination system in an inspection phase;
FIG. 6 is a diagram illustrating a specific example of processing executed by a classification unit of the classification device;
FIG. 7 is a diagram illustrating a specific example of processing executed by a first determination unit of the first determination device;
FIG. 8A is a diagram illustrating a distribution of feature values extracted by the first determination unit in a feature value space, for multiple image data items classified by the first determination device;
FIG. 8B illustrates the Mahalanobis distance from the position of the center-of-gravity of a distribution region for feature values extracted by the first determination unit, for multiple image data items classified by the first determination device;
FIG. 9 is a flow chart illustrating a flow of a learning process; and
FIG. 10 is a flow chart illustrating a flow of a class determination process.

### [Embodiments for Carrying Out the Invention]

In the following, embodiments will be described with reference to the accompanying drawings. Note that throughout the description and the drawings, for elements having substantially the same functional configurations, the same reference signs are assigned, and duplicate descriptions are omitted.

### [First embodiment]

### <System configuration of class determination system in learning phase>

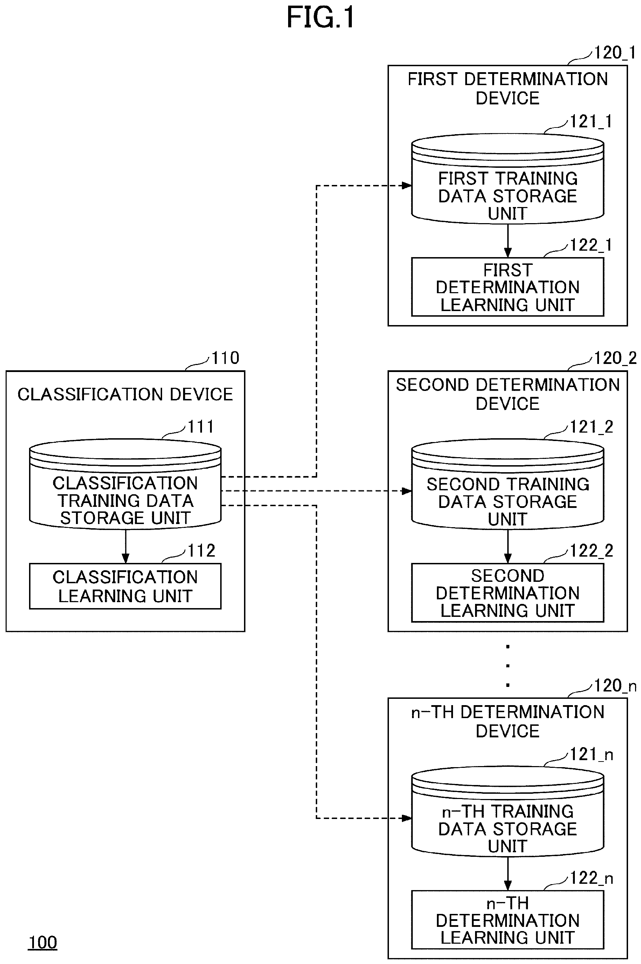

First, a system configuration of a class determination system in a learning phase according to a first embodiment will be described. FIG. 1 is a diagram illustrating an example of a system configuration of a class determination system in a learning phase.

As illustrated in FIG. 1, a class determination system 100 in a learning phase includes a classification device 110, a first determination device 120_1, a second determination device 120_2, ..., and a n-th determination device 120_n.

A classification device 110 has a classification learning program installed, and upon execution of the program, the classification device 110 functions as a classification learning unit 112.

The classification learning unit 112 reads classification training data stored in the classification training data storage unit 111. The classification training data is a data set in which image data items of an object to be inspected are associated with the respective classes.

Note that the image data of the classification training data includes image data of the object to be inspected determined as normal by an inspector (e.g., image data of class = "class 1 (OK)"), and image data of the object to be inspected determined as anomalous by an inspector. In addition, image data of the object to be inspected determined as anomalous by an inspector includes image data of the object to be inspected including various types of anomalies (e.g., class = "class 2 (NG_1)", "class 3 (NG_2)"..., etc.).

The classification learning unit 112 uses the read classification training data, to execute a learning process for a predetermined model. The classification learning unit 112 executes the learning process so as to classify image data of the object to be inspected into belonging classes.

The first determination device 120_1 has a first determination learning program installed, and upon execution of the program, the first determination device 120_1 functions as a first determination learning unit 122_1.

The first determination learning unit 122_1 reads first training data stored in the first training data storage unit 121_1. In the first training data stored in the first training data storage unit 121_1,
* an image data item of the object to be inspected that is determined as normal (class = "class 1(OK)
") from among the image data items in the classification training data, and
* its class ("class 1(OK)"),
are associated with each other.

Also, the first determination learning unit 122_1 includes a variable autoencoder (VAE), and uses the read first training data, to execute a learning process for the VAE. Also, the first determination learning unit 122_1 extracts feature values (also referred to as latent variables) by inputting image data items of the first training data into an encoder that is a part of the VAE for which the learning process is completed.

Further, the first determination learning unit 122_1 identifies a region (distribution region) in a feature value space where the extracted feature values are distributed (also referred to as a latent space). Note that the identified distribution region is stored in a first distribution region storage unit that will be described later, to be used in the inspection phase.

The second determination device 120_2 has a second determination learning program installed, and upon execution of the program, the second determination device 120_2 functions as a second determination learning unit 122_2.

The second determination learning unit 122_2 reads second training data stored in a second training data storage unit 121_2. In the second training data stored in the second training data storage unit 121_2,
* an image data item of the object to be inspected that is determined as anomalous from among the image data items in the classification training data, which is anomalous with respect to a predetermined class (anomaly in "class 2 (NG_1)"), and
* its class ("class 2 (NG_1)"),
are associated with each other.

Also, the second determination learning unit 122_2 includes a VAE, and executes a learning process for the VAE by using the read second training data. Also, the second determination learning unit 122_2 extracts feature values by inputting image data items of the second training data into an encoder that is a part of the VAE for which the learning process is completed.

Further, the second determination learning unit 122_2 identifies a distribution region in a feature value space where the extracted feature values are distributed. Note that the identified distribution region is stored in a second distribution region storage unit that will be described later, to be used in the inspection phase.

The n-th determination device 120_n has a n-th determination learning program installed, and upon execution of the program, the n-th determination device 120_n functions as a n-th determination learning unit 122_n.

The n-th determination learning unit 122_n reads n-th training data stored in a n-th training data storage unit 121_n. In the n-th training data stored in the n-th training data storage unit 121_n,
* an image data item of the object to be inspected that is determined as anomalous from among the image data items in the classification training data, which is anomalous with respect to a predetermined class ("anomaly in class n (NG_n-1)"), and
* its class ("class n (NG_n-1)")
are associated with each other.

Also, the n-th determination learning unit 122_n includes a VAE, and executes a learning process for the VAE by using the read n-th training data. Also, the n-th determination learning unit 122_n extracts feature values by inputting image data items of the n-th training data into an encoder that is a part of the VAE for which the learning process is completed.

Further, the n-th determination learning unit 122_n identifies a distribution region in a feature value space where the extracted feature values are distributed. Note that the identified distribution region is stored in a n-th distribution region storage unit that will be described later, to be used in the inspection phase.

In this way, the class determination system 100 in the learning phase includes a number of determination devices where the number corresponds to the number of classes as classification targets (=n) into which the classification learning unit 112 of the classification device 110 classifies image data of the object to be inspected. Note that in the present embodiment, assume that the object to be inspected is a predetermined sheet (e.g., a sheet for medical use), and that five types of anomalies (attached foreign matter, bright spot, black line, black spot, fold) would occur in an object to be inspected. Therefore, in the present embodiment, the number of classes is n=6, and the correspondence relationship between each class and normality or anomaly (or the type of anomaly) is as follows:
* class 1 (OK) = normality
* class 2 (NG_1) = anomaly (attached foreign matter)
* class 3 (NG_2) = anomaly (bright spot)
* class 4 (NG_3) = anomaly (black line)
* class 5 (NG_4) = anomaly (black spot)
* class 6 (NG_5) = anomaly (fold).

### <Hardware configuration of classification device or determination device>

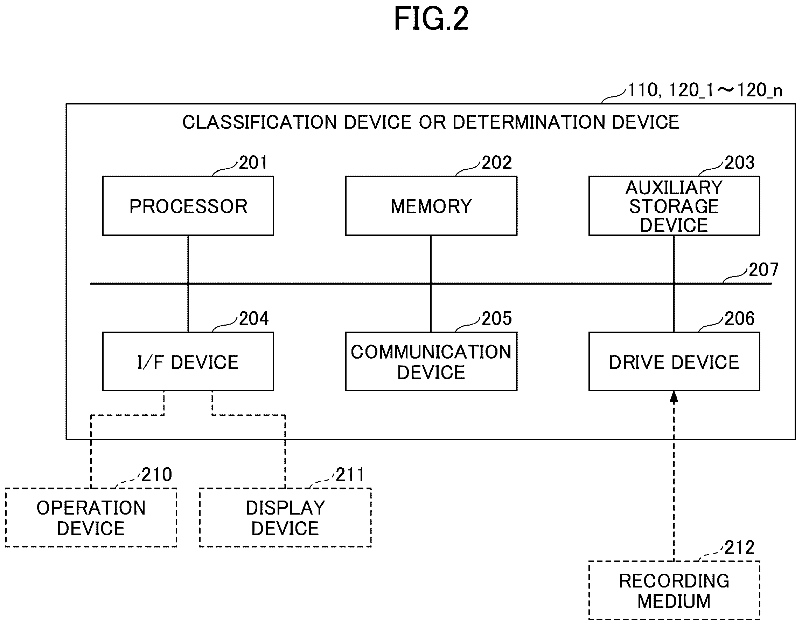

Next, a hardware configuration of the classification device 110 or any of the first determination device 120_1 to the n-th determination device 120_n will be described. Note that the classification device 110 and all of the first determination device 120_1 to the n-th determination device 120_n have the same hardware configuration; therefore, here, these devices will be described together with reference to FIG. 2.

FIG. 2 is a diagram illustrating an example of a hardware configuration of the classification device or the determination device. As illustrated in FIG. 2, the classification device 110 or any of the first determination device 120_1 to the n-th determination device 120_n includes a processor 201, a memory 202, an auxiliary storage device 203, an interface (I/F) device 204, a communication device 205, and a drive device 206. Note that the hardware components of the classification device 110 or any of the first determination device 120_1 to the n-th determination device 120_n are interconnected via a bus 207.

The processor 201 includes various arithmetic/logic devices such as a central processing unit (CPU) and a graphics processing unit (GPU). The processor 201 reads various programs (e.g., a classification learning program, or one of the first to n-th classification learning programs) to be loaded onto the memory 202, and executes the program.

The memory 202 includes main memory devices such as a read-only memory (ROM), a random access memory (RAM), and the like. The processor 201 and the memory 202 constitute what-is-called a computer, and by causing the processor 201 to execute the various programs loaded on the memory 202, the computer implements, for example, the functions described above (as implemented in the classification learning unit 112 to the n-th determination learning unit 122_n).

The auxiliary storage device 203 stores the various programs and various items of data used when the various programs are executed by the processor 201. For example, the classification training data storage unit 111 and the first training data storage unit 121_1 to the n-th training data storage unit 121_n are implemented in the auxiliary storage device 203.

The I/F device 204 is a connection device that connects an operation device 210 as an example of an external device and a display device 211 with the classification device 110 or one of the first determination device 120_1 to the n-th determination device 120_n. The I/F device 204 receives an operation on the classification device 110 or any of the first determination device 120_1 to the n-th determination device 120_n through an operation device 210. Also, the I/F device 204 displays results of processing executed by the classification device 110 or any of the first determination device 120_1 to the n-th determination device 120_n via a display device 211. The communication device 205 is a communication device for communicating with another device (the first determination device 120_1 to the n-th determination device 120_n, or the classification device 110).

The drive device 206 is a device for setting a recording medium 212. The recording medium 212 here includes a medium to record information optically, electrically, or magnetically, such as a CD-ROM, a flexible disk, a magneto-optical disk, or the like. Further, the recording medium 212 may include a semiconductor memory or the like to record information electrically, such as a ROM, a flash memory, or the like.

Note that the various programs installed in the auxiliary storage device 203 are installed by, for example, setting a distributed recording medium 212 in the drive device 206, and reading the various programs recorded on the recording medium 212 by the drive device 206. Alternatively, the various programs installed in the auxiliary storage device 203 may be installed by downloading from a network via the communication device 205.

### <Specific example of processing executed by classification learning unit of classification device>

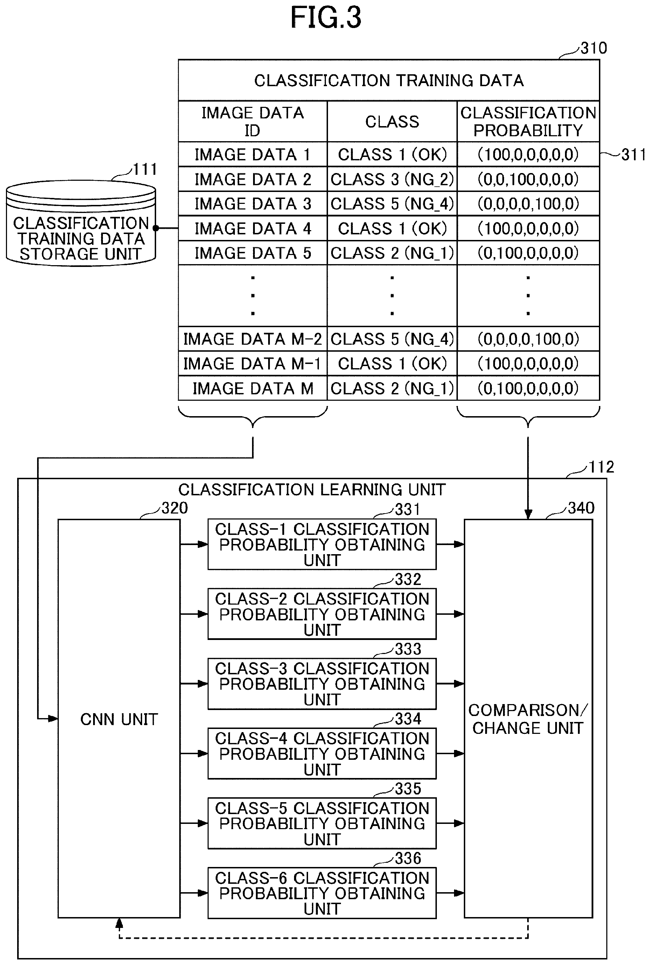

Next, a specific example of processing executed by the classification learning unit 112 of the classification device 110 will be described. FIG. 3 is a diagram illustrating a specific example of processing executed by the classification learning unit 112 of the classification device 110.

As illustrated in FIG. 3, the classification training data 310 includes "image data ID", "class", and "classification probability" as fields of information .

The field of "image data ID" stores an identifier to identify one of multiple image data items of an object to be inspected. The field of "class" stores a class determined by an inspector with respect to the corresponding image data item. The field of "classification probability" stores correct answer data when the classification learning unit 112 executes a learning process for a predetermined model. Specifically, the correct answer data includes an element set with 100% as the classification probability for a class to which the image data item belongs, and the other elements set with 0% as the classification probabilities for classes other than the class to which the image data item belongs.

In the example in FIG. 3, the classification probability designated with a sign 311 has a class of "class 1 (OK)" that corresponds to image data (image data ID = "image data 1"). Therefore, the classification probability designated with the sign 311 is "100" for class 1 (OK), and "0" for class 2 (NG_1) to class 6 (NG_5).

Also, as illustrated in FIG. 3, the classification learning unit 112 further includes a convolutional neural network (CNN) unit 320, a class-1 classification probability obtaining unit 331 to a class-6 classification probability obtaining unit 336, and a comparison/change unit 340.

The CNN unit 320 is a predetermined model for which the classification learning unit 112 executes a learning process. The CNN unit 320 outputs a classification probability for each class (class 1 (OK) to class 6 (NG_5)) in response to receiving as input an image data item identified by one of the identifiers stored in the field of "image data ID" in the classification training data 310.

The class-1 classification probability obtaining unit 331 obtains a classification probability of class 1 (OK) from among the classification probabilities of the respective classes (class 1 (OK) to class 6 (NG_5)) output from the CNN unit 320, and informs the comparison/change unit 340 of the classification probability.

In the following, in substantially the same way, each of the class-2 classification probability obtaining unit 332 to the class-6 classification probability obtaining unit 336 obtains a classification probability of a corresponding class (class 2 (NG_1) to class 6 (NG_5)) output from the CNN unit 320, and informs the comparison/change unit 340 of the classification probability.

The comparison/change unit 340 compares the classification probability of each class informed by one of the class-1 classification probability obtaining unit 331 to the class-6 classification probability obtaining unit 336, with a classification probability of the corresponding image data read from the classification training data 310, to calculate an error. Also, the comparison/change unit 340 executes a learning process for the CNN unit 320 by back-propagating the calculated error to update model parameters of the CNN unit 320.

In this way, according to the classification learning unit 112, when the image data is input, the model parameters of the CNN unit 320 are updated so as to cause the classification probability of each class output from the CNN unit 320, to approach "classification probability" as the correct answer data of the classification training data 310.

### <Specific example of processing executed by first to n-th determination learning units of first to n-th determination devices>

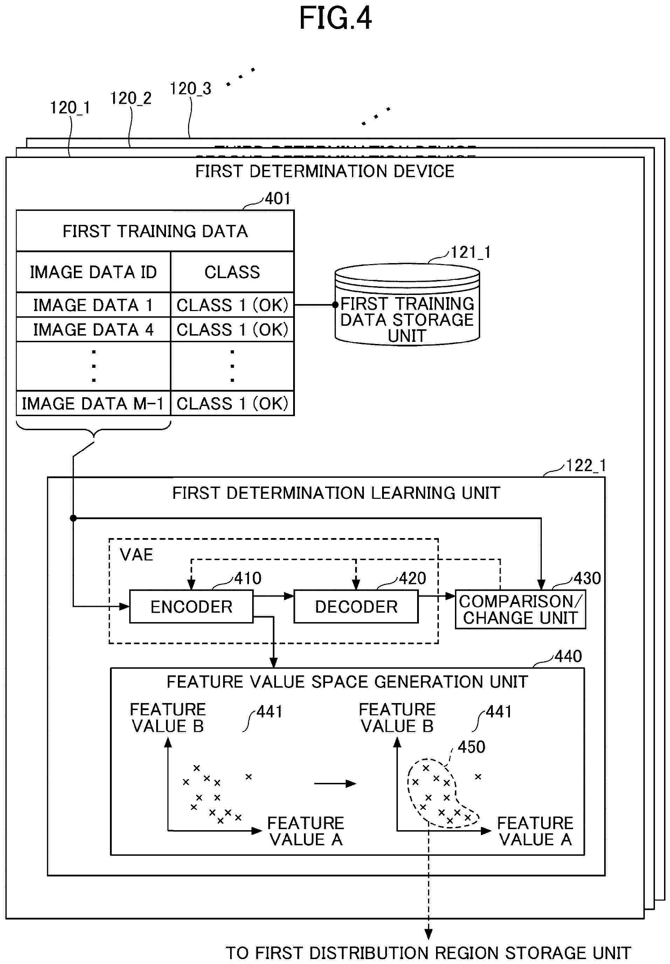

Next, specific examples of processing executed by the first determination learning unit 122_1 to n-th determination learning unit 122_n of the first determination device 120_1 will be described. Note that substantially the same processing is executed by any of the first determination learning unit 122_1 of the first determination device 120_1 to the n-th determination learning unit 122_n of the n-th determination device 120_n. Therefore, here, a specific example of processing executed by the first determination learning unit 122_1 of the first determination device 120_1 will be described. FIG. 4 is a diagram illustrating the specific example of processing executed by the first determination learning unit 122_1 of the first determination device 120_1.

As illustrated in FIG. 4, the first training data 401 includes "image data ID" and "class" as fields of information.

The field of "image data ID" stores an identifier to identify an image data item of the object to be inspected determined as normal by an inspector (i.e., an image data item of the "class 1(OK)"). The field of "class" stores "class 1 (OK)".

Also, as illustrated in FIG. 4, the first determination learning unit 122_1 further includes an encoder 410 and a decoder 420 constituting a VAE, a comparison/change unit 430, and a feature value space generation unit 440.

The encoder 410 executes dimensional compression of image data in response to receiving as input image data of the first training data 401 (image data of "class 1 (OK)"), to extract feature values.

The decoder 420 reproduces an original image data from the image data to which dimensional compression has been applied by the encoder 410.

The comparison/change unit 430 compares the original image data reproduced by the decoder 420 with the image data input into the encoder 410, and updates the model parameters of the encoder 410 and the decoder 420 so as to make both consistent with each other.

Thus, by adopting a configuration that uses a VAE, on the first determination device 120_1, an unsupervised learning process can be executed.

Note that once the model parameters of the encoder 410 and the decoder 420 are updated, and the learning process for the encoder 410 and the decoder 420 is completed, the respective image data items of (image data items of "class 1 (OK)") in the first training data 401 are input into the encoder 410. This causes the encoder 410 to extract the feature values of the respective image data items.

The feature value space generation unit 440 identifies a region (distribution region) in a feature value space where the feature values extracted by the encoder 410 are distributed. A distribution region identified by the feature value space generation unit 440 is a distribution region in which feature values of image data items of an object to be inspected determined as normal by an inspector are distributed.

Specifically, the feature value space generation unit 440 plots the feature values extracted by the encoder 410 in the feature value space. In FIG. 4, a feature value space 441 is a two-dimensional feature value space having the horizontal axis representing feature value A, and the vertical axis representing feature value B, where an X mark indicates a plot position of a pair of feature values extracted by the encoder 410 in the feature value space 441.

Also, the feature value space generation unit 440 identifies a first distribution region 450 in which the feature values extracted by the encoder 410 are distributed in the feature value space 441. In FIG. 4, the first distribution region 450 is a distribution region in which feature values of image data of an object to be inspected determined as normal by an inspector are distributed.

Note that in the example in FIG. 4, although a two-dimensional feature value space constituted with two different types of feature values is exemplified, a feature value space is not limited to be two-dimensional; a feature value space having any dimensionality may be formed according to the types of feature values extracted by the encoder 410.

Also, any method may be adopted for specifying the first distribution region 450; for example, a distribution region may be specified by calculating the position of center of gravity of all feature values plotted in the feature value space, and setting positions having a distance of 3σ from the center of gravity as the boundary.

### <System configuration of class determination system in inspection phase>

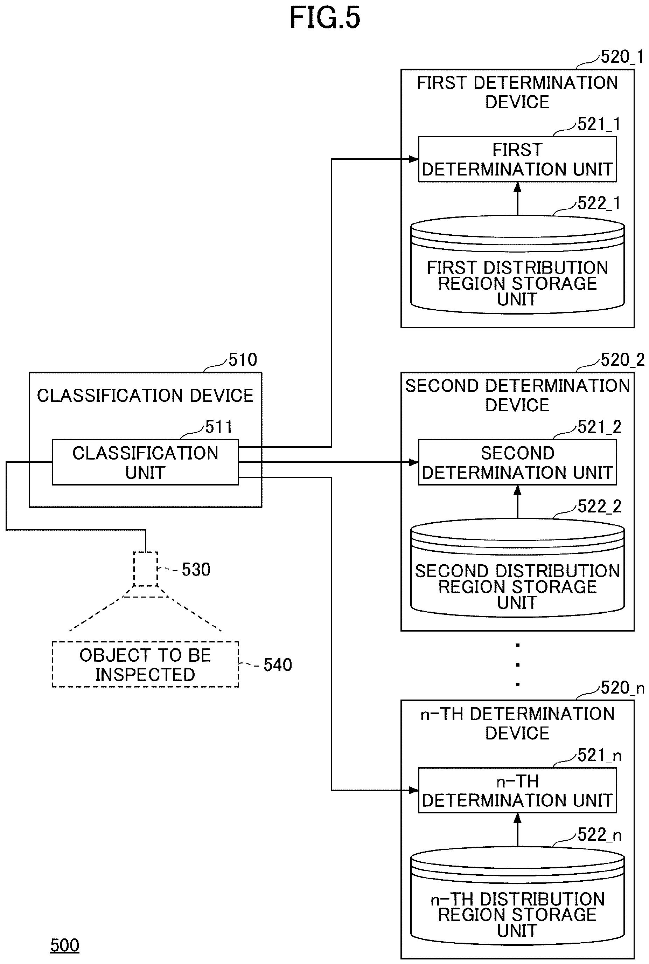

Next, a system configuration of a class determination system in an inspection phase according to the first embodiment will be described. FIG. 5 is a diagram illustrating an example of a system configuration of a class determination system in an inspection phase.

As illustrated in FIG. 5, a class determination system 500 in an inspection phase includes a classification device 510, a first determination device 520_1, a second determination device 520_2, ..., and a n-th determination device 520_n.

The classification device 510 has a classification program installed, and upon execution of the program, the classification device 510 functions as a classification unit 511.

The classification unit 511 includes a trained CNN unit, and in response to receiving as input image data of an object to be inspected 540 captured by the imaging device 530, classifies the image data into one of a predetermined number of classes.

The first determination device 520_1 has a first determination program installed, and upon execution of the program, the first determination device 520_1 functions as a first determination unit 521_1.

In the case where the image data of the object to be inspected 540 is classified as a class = "class 1(OK)" in the classification unit 511, the first determination unit 521_1 processes the image data, to extract the feature values.

Also, the first determination unit 521_1 reads the first distribution region stored in the first distribution region storage unit 522_1, to determine whether the extracted feature values are included in the first distribution region in the feature value space.

Also, in the case where it is determined that the extracted feature values are included in the first distribution region in the feature value space, the first determination unit 521_1 outputs a determination result that the image data of the object to be inspected 540 belongs to "class 1 (OK)".

Alternatively, in the case where it is determined that the extracted feature values are not included in the first distribution region in the feature value space, the first determination unit 521_1 outputs a determination result that the image data of the object to be inspected 540 belongs to a "new class".

The second determination device 520_2 has a second determination program installed, and upon execution of the program, the second determination device 520_2 functions as a second determination unit 521_2.

In the case where the image data of the object to be inspected 540 is classified as a class = "class 2 (NG_1)" in the classification unit 511, the second determination unit 521_2 processes the image data, to extract the feature values.

Also, the second determination unit 521_2 reads the second distribution region stored in the second distribution region storage unit 522_2, to determine whether the extracted feature values are included in the second distribution region in the feature value space.

Also, in the case where it is determined that the extracted feature values are included in the second distribution region in the feature value space, the second determination unit 521_2 outputs a determination result that the class of the image data of the object to be inspected 540 belongs to "class 2 (NG_1)".

Alternatively, in the case where it is determined that the extracted feature values are not included in the second distribution region in the feature value space, the second determination unit 521_2 outputs a determination result that the image data of the object to be inspected 540 belongs to a "new class".

The n-th determination device 520_n has a n-th determination program installed, and upon execution of the program, the n-th determination device 520_n functions as a n-th determination unit 521_n.

In the case where the image data of the object to be inspected 540 is classified as a class = "class n (NG_n-1)" in the classification unit 511, the n-th determination unit 521_n processes the image data, to extract the feature values.

Also, the n-th determination unit 521_n reads the n-th distribution region stored in the n-th distribution region storage unit 522_n, to determine whether the extracted feature values are included in the n-th distribution region in the feature value space.

Also, in the case where it is determined that the extracted feature values are included in the n-th distribution region in the feature value space, the n-th determination unit 521_n outputs a determination result that the image data of the object to be inspected 540 belongs to "class n (NG_n-1)".

Alternatively, in the case where it is determined that the extracted feature values are not included in the n-th distribution region in the feature value space, the n-th determination unit 521_n outputs a determination result that the image data of the object to be inspected 540 belongs to a "new class".

In this way, the class determination system 500 in the inspection phase includes a number of determination devices where the number corresponds to the number of classes as classification targets (=n) into which the classification unit 511 of the classification device 510 classifies image data of the object to be inspected 540. Note that in the present embodiment, the inspection phase will be described assuming the number of classes n=6 as in the learning phase.

### <Specific example of processing executed by classification unit of classification device>

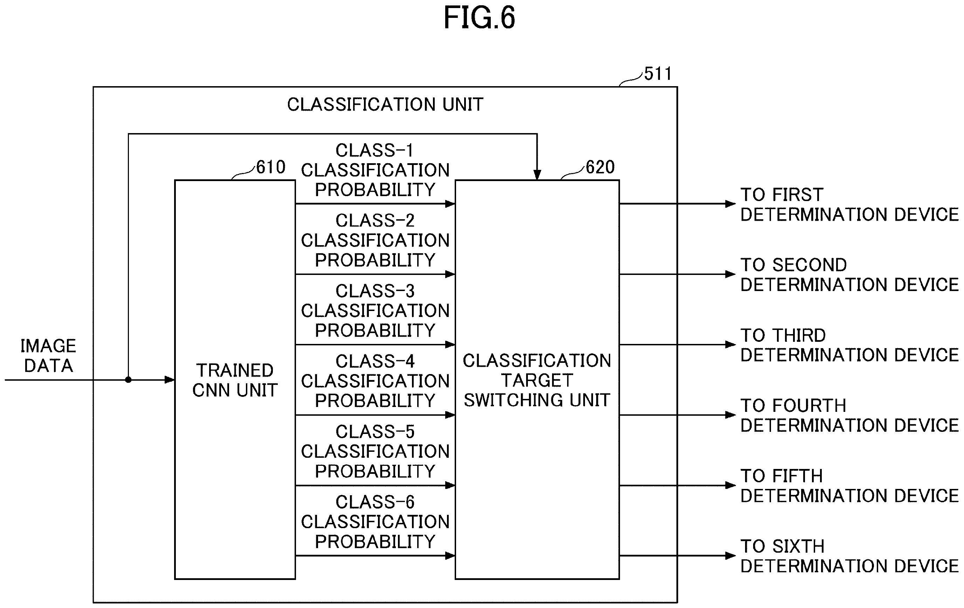

Next, a specific example of processing executed by the classification unit 511 in the classification device 510 will be described. FIG. 6 is a diagram illustrating a specific example of processing executed by a classification unit of the classification device.

As illustrated in FIG. 6, the classification unit 511 further includes a trained CNN unit 610 and a classification target switching unit 620.

The trained CNN unit 610 is a trained model that has been generated by the classification learning unit 112 executing a learning process for the CNN unit 320 during the learning phase. When image data of the object to be inspected 540 is input into the trained CNN unit 610, the trained CNN unit 610 outputs the classification probabilities of the respective classes (class 1 (OK) to class 6 (NG_5)).

The classification target switching unit 620 identifies a class having a highest classification probability, from among the classification probabilities of the respective classes (class 1 (OK) to class 6 (NG_5)) output from the trained CNN unit 610. Also, the classification target switching unit 620 determines the identified class as the classification target of the image data of the object to be inspected 540, and transmits the image data of the object to be inspected 540 to a determination device provided to be associated with the determined classification target.

For example, in the case where the identified class is a "class 1 (OK)", the classification target switching unit 620 transmits the image data of the object to be inspected 540 to the first determination device 520_1. Also, in the case where the identified class is a "class 2 (NG_1)", the classification target switching unit 620 transmits the image data of the object to be inspected 540 to the second determination device 520_2. Similarly, for the other cases, if the identity class is one of "class 3 (NG_2)" to "class 6 (NG_5)", the classification target switching unit 620 transmits the image data of the object to be inspected 540 to the corresponding one of the third determination device 520_3 to the sixth determination device 520_6.

### <Specific example of processing executed by first to n-th determination units of first to n-th determination devices>

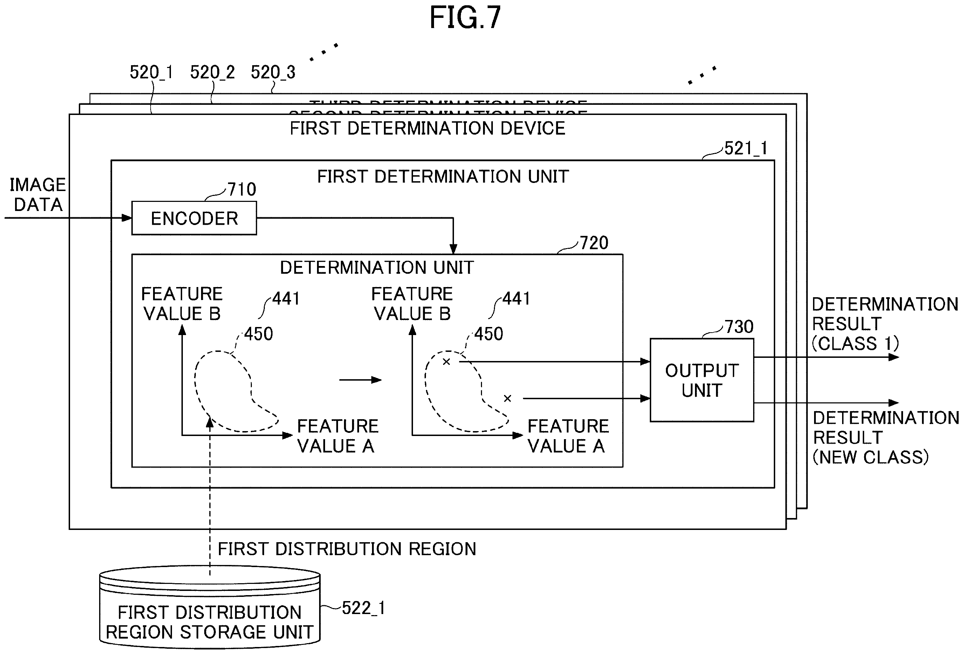

Next, a specific example of processing executed by one of the first determination unit 521_1 of the first determination device 520_1 to the n-th determination unit 521_n of the n-th determination device 520_n will be described. Note that substantially the same processing is executed by any of the first determination unit 521_1 to the n-th determination unit 521_n of the first determination device 520_1. Therefore, here, a specific example of processing executed by the first determination unit 521_1 of the first determination device 520_1 will be described. FIG. 7 is a diagram illustrating the specific example of processing executed by the first determination unit 521_1 of the first determination device 520_1.

As illustrated in FIG. 7, the first determination unit 521_1 includes an encoder 710, a determination unit 720, and an output unit 730.

The encoder 710 is an encoder that is a part of a trained VAE that is generated by the first determination learning unit 122_1 executing a learning process for the VAE in the learning phase, and is an example of an extraction unit. In response to receiving as input image data of the object to be inspected 540 transmitted from the classification device 510, the encoder 710 extracts feature values.

The determination unit 720 reads the first distribution region 450 from the first distribution region storage unit 522_1. Also, the determination unit 720 plots the feature values extracted by the encoder 710 in the feature value space 441. Further, the determination unit 720 determines whether the plotted feature values are included in the first distribution region 450.

In the case where the feature values plotted by the determination unit 720 are included in the first distribution region 450, the output unit 730 outputs a determination result that the image data of the object to be inspected 540 belongs to "class 1 (OK)".

Also, in the case where the feature values plotted by the determination unit 720 are not included in the first distribution region 450, the output unit 730 outputs a determination result that the image data of the object to be inspected 540 belongs to a "new class" (a determination result of not belonging to class 1 (OK)).

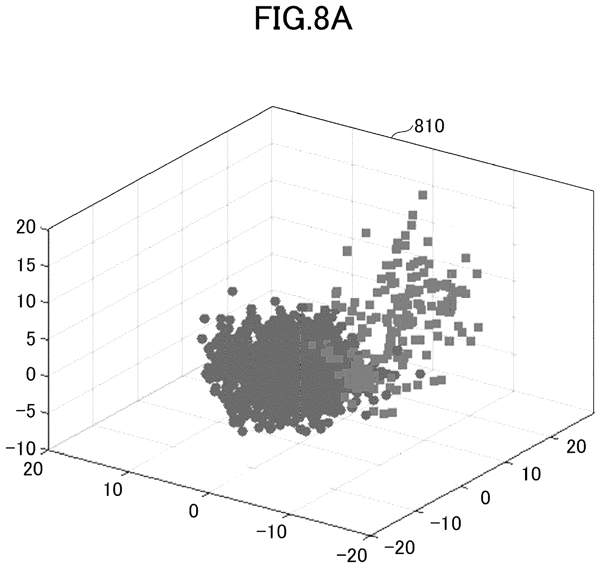

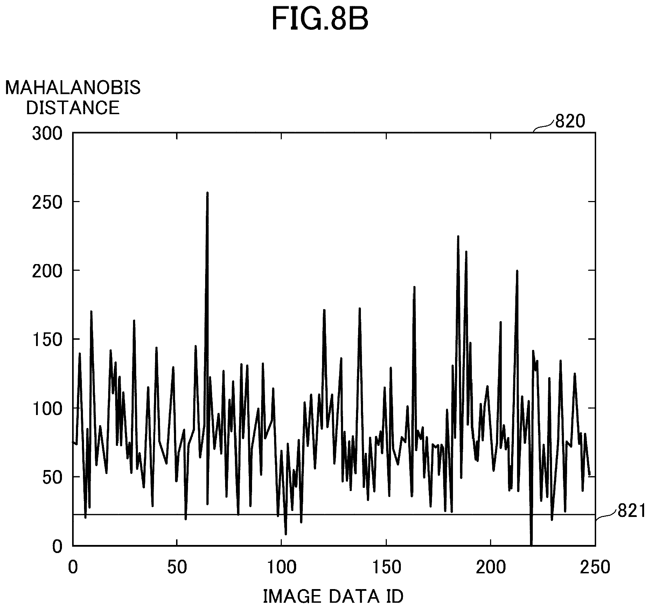

Note that the output unit 730 may be configured to visualize and output, in addition to a determination result, a determination process (a distribution of feature values in the feature value space, and the relationship between the feature values and the boundary positions of the distribution region) (see FIGs. 8A and 8B).

FIG. 8A is a diagram illustrating a distribution in a feature value space of the feature values extracted by the encoder 710 for multiple image data items classified by the first determination device. In FIG. 8A, a graph 810 represents an example of a three-dimensional feature value space, and each mark (a circle mark or a square mark) in the graph 810 represents a tuple of feature values.

Note that the example in FIG. 8A illustrates a case where multiple image data items are input into the classification device 510 when stains occur continuously in the object to be inspected 540, and each of the multiple image data items is classified as a "class 1 (OK)" by the classification unit 511. Also, the example in FIG. 8A illustrates a case where feature values of image data before the stains occur are plotted with circle marks, and feature values after the stains have occurred are plotted with square marks.

In this way, by visualizing in real time a distribution of feature values in the feature value space by the output unit 730, the worker who views the graph 810 can easily grasp that
* tuples of feature values plotted with square marks are different from tuples of feature values plotted with circle marks, and a new anomaly occurs; and
* it is necessary to generate a new class into which image data items having the respective feature values plotted with square marks are to be classified; and the like.

Also, FIG. 8B illustrates the Mahalanobis distance from the position of the center-of-gravity of the distribution region of the feature values extracted by the encoder 710 for multiple image data items classified by the first determination device. In a graph 820 in FIG. 8B, the horizontal axis represents the image data ID, and the vertical axis represents the Mahalanobis distance from the position of center of gravity of the first distribution region 450 to the respective positions of the tuples of feature values.

Similar to FIG. 8A, the example in FIG. 8B illustrates a case where multiple image data items are input into the classification device 510 when stains occur continuously in the object to be inspected 540, and each of the multiple image data items is classified as a "class 1 (OK)" by the classification unit 511.

Also, in the graph 820, a sign 821 indicates a distance corresponding to a boundary position of the first distribution region 450 (as described above, it is assumed in the present embodiment that the boundary of the first distribution region 450 is positioned at a distance of 3σ from the position of center of gravity of the first distribution region 450 in the feature value space).

In this way, by visualizing in real time the relationship between the feature values and the boundary position of the distribution region, the worker who views the graph 820 can easily grasp that
* there are feature values exceeding the boundary position of the first distribution region 450, and a new anomaly occurs; and
* it is necessary to generate a new class into which image data items having the respective feature values exceeding the boundary position of the first distribution region 450, are to be classified; and the like.

Note that as illustrated in the graph 810 in FIG. 8A and in the graph 820 in FIG. 8B, although image data items in the case where stains occur continuously in the object to be inspected 540 are temporarily classified as "class 1 (OK)", these are later determined as not included in the first distribution region 450 by the determination unit 720. Consequently, the first determination unit 521_1 can output determination results that the multiple image data items belong to the "new class".

In this way, according to the class determination system 500 according to the first embodiment, in the case where an anomaly of a new type not included in the classification training data 310 occurs, although the corresponding image data item is temporarily classified into an existing classification target, the determination device of the classification target later determines whether the image data item is normal or anomalous. In this way, incorrect class determination can be avoided. In other words, according to the class determination system 500 of the first embodiment, erroneous determinations can be reduced in the case of executing class determinations for image data items of the object to be inspected 540.

### <Flow of learning process>

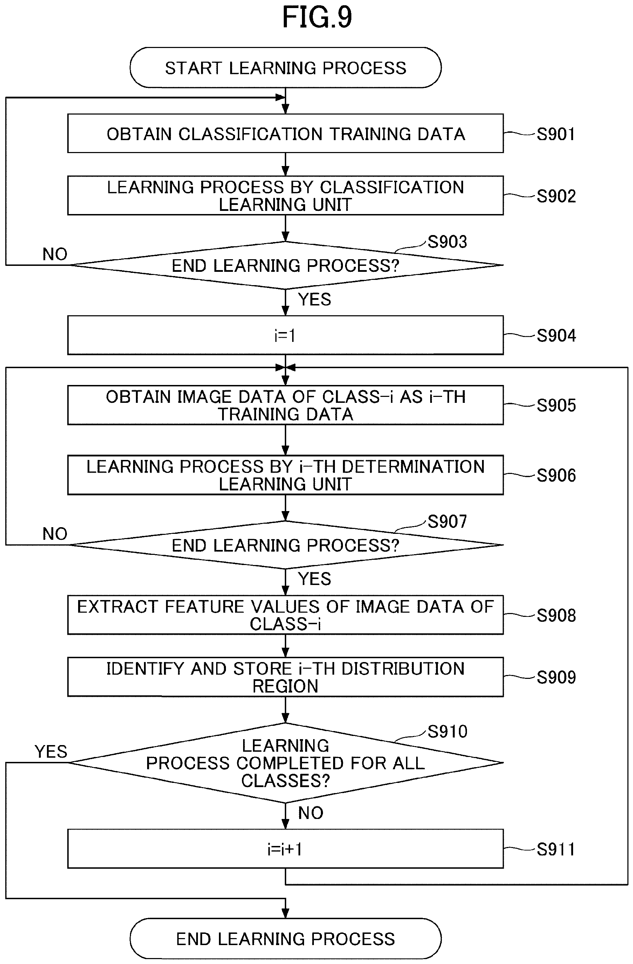

Next, a flow of the learning process executed in the class determination system 100 in the learning phase will be described. FIG. 9 is a flow chart illustrating a flow of a learning process.

At Step S901, the classification device 110 obtains the classification training data, and stores it in the classification training data storage unit 111.

At Step S902, the classification learning unit 112 of the classification device 110 uses the classification training data 310, to execute a learning process for the CNN unit 320.

At Step S903, the classification learning unit 112 of the classification device 110 determines whether to end the learning process for the CNN unit 320. If it is determined at Step S903 that the learning process for the CNN unit 320 is to be continued (in the case of NO at Step S903), the process returns to Step S901. On the other hand, if it is determined at Step S903 to end the learning process for the CNN unit 320 (if YES is determined at Step S903), the process proceeds to Step S904.

At Step S904, the classification device 110 sets "1" to the counter i that counts the number of classes.

At Step S905, the i-th determination device obtains image data items of class i from among the multiple image data items included in the classification training data 310, as the i-th training data.

At Step S906, the i-th determination learning unit of the i-th determination device uses the i-th training data, to execute a learning process for the VAE.

At Step S907, the i-th determination learning unit of the i-th determination device determines whether to end the learning process for the VAE. If it is determined at Step S907 to continue the learning process for the VAE (if NO is determined at Step S907), the process returns to Step S905. On the other hand, if it is determined at Step S907 to end the learning process for the VAE (if YES is determined at Step S905), the process proceeds to Step S908.

At Step S908, the i-th determination learning unit of the i-th determination device inputs each image data item of the i-th training data into the encoder that is a part of the VAE for which the learning process is completed, to extract feature values of the image data of class i.

At Step S909, the feature value space generation unit of the i-th determination device identifies an i-th distribution region based on the distribution of the feature values of the image data of class i in the feature value space, and stores the identified region in the i-th distribution region storage unit.

At Step S910, the classification device 110 determines whether the learning process for the VAE has been completed in every determination device associated with the corresponding class. If it is determined at Step S910 that there is a determination device for which the learning process with respect to the VAE has not been completed (in the case of NO at Step S910), the process proceeds to Step S911.

At Step S911, the classification device 110 increments the counter i, and returns to Step S905.

On the other hand, if it is determined at Step S910 that the learning process for the VAE has been completed for all the determination devices corresponding to the respective classes (in the case of YES at Step S910), the learning process ends.

### <Flow of class determination process>

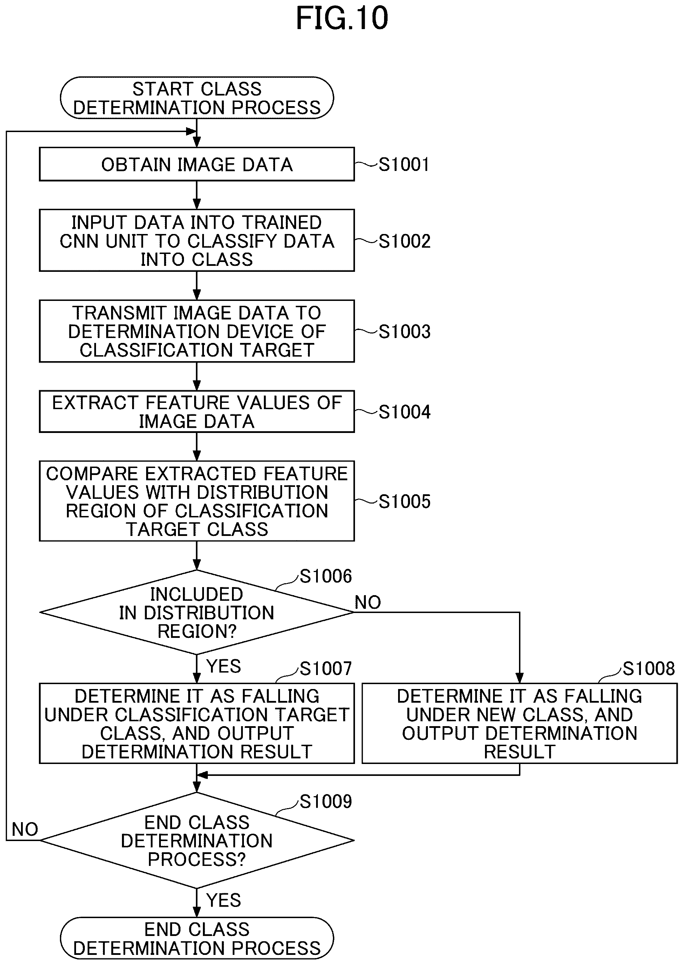

Next, a flow of a class determination process executed by the class determination system 500 in the inspection phase will be described. FIG. 10 is a flow chart illustrating a flow of a class determination process.

At Step S1001, the classification device 510 obtains image data of the object to be inspected.

At Step S1002, the classification unit 511 of the classification device 510 inputs the obtained image data into the trained CNN unit 610, to classify the data into one of the classes.

At Step S1003, the classification unit 511 of the classification device 510 transmits the image data to a determination device associated with the classification target.

At Step S1004, the determination device associated with the classification target inputs the image data transmitted from the classification device 510 into an encoder that is a part of a trained VAE, to extract feature values.

At Step S1005, the determination device associated with the classification target compares the extracted feature values with the distribution region of the class as the classification target.

At Step S1006, the determination device associated with the classification target determines whether the extracted feature values are included in the distribution region of the class as the classification target.

If it is determined at Step S1006 that the extracted feature values are included in the distribution region (in the case of YES at Step S1006), the process proceeds to Step S1007.

At Step S1007, the determination device associated with the classification target outputs a determination result that the image data of the object to be inspected belongs to the class as the classification target.

On the other hand, if it is determined at Step S1006 that the extracted feature values are not included in the distribution region (in the case of NO at Step S1006), the process proceeds to Step S1008.

At Step S1008, the determination device associated with the classification target outputs a determination result that the image data of the object to be inspected belongs to a new class.

At Step S1009, the classification device 510 determines whether to end the class determination process. If it is determined at Step S1009 that the class determination process is to be continued (in the case of NO at Step S1009), the process returns to Step S1001.

On the other hand, if it is determined at Step S1009 to end the class determination process (in the case of YES at Step S1009), the class determination process ends.

### [Summary]

As clarified from the above description, the class determination system according to the first embodiment,
* classifies image data of an object to be inspected into one of a predetermined number of classes;
* causes a determination device provided to be associated with the classification target, to process the classified image data, so as to extract feature values;
* determines whether the feature values of the image data of the object to be inspected are included in a distribution region of the classification target into which the image data of the object to be inspected is classified, from among distribution regions of feature values of image data items whose classes are known, in a feature value space defined for each classification target; and
* if it is determined that feature values of the image data of the object to be inspected are not included in the distribution region, outputs a determination result that the image data of the object to be inspected belongs to a new class; or if it is determined that the feature values are included, outputs a determination result that the image data of the object to be inspected belongs to the class as the classification target.

In this way, according to the class determination system of the first embodiment, even in the case where a new type of anomaly not included in the classification training data occurs in the inspection phase, execution of an incorrect class determination can be avoided. Consequently, according to the class determination system of the first embodiment, erroneous determinations can be reduced in the case of executing class determinations for image data items of the object to be inspected.

### [Second embodiment]

In the first embodiment described above, although the class determination system in the learning phase and the class determination system in the inspection phase have been described as being configured separately, both may be configured as an integrated system.

Also, in the first embodiment described above, although the first determination device to the n-th determination device have been described as being configured separately, the first determination device to the n-th determination device may be configured as an integrated device.

Also, in the first embodiment described above, although the classification device and the first determination device to the n-th determination device have been described as being configured separately, the classification device and the first determination device to the n-th determination device may be configured as an integrated device. In this case, for example, the classification learning program and the respective determination learning programs can be configured as a single learning program. Similarly, the classification program and the respective determination programs can be configured as a single class determination program.

Also, in the first embodiment described above, although the number of classes (=n) is "6", the number of classes may be less than or equal to 5 or greater than or equal to 7.

Also, in the first embodiment described above, a case has been described in which the class determination system 500 executes processing until it determines that image data belongs to a new class. However, in the case where image data items determined as belonging to the new class are accumulated to a certain amount, the system may be configured to define the new class (e.g., "class 7 (NG_6)") to execute a re-learning process on the classification learning unit 112. Also, the system may be configured to provide a seventh determination device 120_7, to execute a re-learning process on the seventh determination learning unit 122_7.

Note that the present invention is not limited to the configurations described herein including the configurations exemplified in the above embodiments, and those combined with other elements. In these regards, it is possible to alter a configuration within a range not deviating from the gist of the present invention, and the range can be appropriately determined according to the application form.

## Claims

1. A class determination system comprising:
a classification unit configured to classify image data of an object to be inspected into one of a predetermined number of classes;
an extraction unit provided to be associated with a classification target, and configured to extract a feature value by processing the image data classified by the classification unit;
a determination unit configured to determine whether the feature value of the image data of the object to be inspected is included in a distribution region of the classification target into which the image data of the object to be inspected is classified, from among distribution regions of feature values of image data items whose classification targets are known, where in each of the distribution regions, a feature value space is defined for a corresponding classification target; and
an output unit configured to output, in a case where it is determined that the feature value of the image data of the object to be inspected is not included in the distribution region, a determination result that the image data of the object to be inspected belongs to a new class.

2. The class determination system as claimed in claim 1, wherein in a case where it is determined that the feature value is included in the distribution region, the output unit outputs a determination result that the image data of the object to be inspected is classified into a class as the classification target.

3. The class determination system as claimed in claim 1, wherein the classification unit includes a trained model that is generated by executing a learning process using, as training data, image data items whose classification targets are known, and classifies the image data of the object to be inspected by inputting the image data of the object to be inspected into the trained model.

4. The class determination system as claimed in claim 3, wherein the extraction unit includes an encoder that is a part of a trained variable autoencoder obtained by executing a learning process for a variable autoencoder using image data items of a same class from among training data, and inputs the image data classified by the classification unit into the encoder, to extract the feature value.

5. The class determination system as claimed in claim 4, wherein the distribution region used by the determination unit is specified based on a distribution of feature values obtained by inputting image data items of the same class from among items of the training data into the encoder that is the part of the trained variable autoencoder.

6. A class determination method comprising:
a classification step of classifying image data of an object to be inspected into one of a predetermined number of classes;
an extraction step of extracting, in association with a classification target, a feature value by processing the image data classified by the classification step;
a determination step of determining whether the feature value of the image data of the object to be inspected is included in a distribution region of the classification target into which the image data of the object to be inspected is classified, from among distribution regions of feature values of image data items whose classification targets are known, where in each of the distribution regions, a feature value space is defined for a corresponding classification target; and
an output step of outputting, in a case where it is determined that the feature value of the image data of the object to be inspected is not included in the distribution region, a determination result that the image data of the object to be inspected belongs to a new class.

7. A class determination program causing a computer to execute a method comprising:
a classification step of classifying image data of an object to be inspected into one of a predetermined number of classes;
an extraction step of extracting, in association with a classification target, a feature value by processing the image data classified by the classification step;
a determination step of determining whether the feature value of the image data of the object to be inspected is included in a distribution region of the classification target into which the image data of the object to be inspected is classified, from among distribution regions of feature values of image data items whose classification targets are known, where in each of the distribution regions, a feature value space is defined for a corresponding classification target; and
an output step of outputting, in a case where it is determined that the feature value of the image data of the object to be inspected is not included in the distribution region, a determination result that the image data of the object to be inspected belongs to a new class.
